(19) Europäisches Patentamt
European Patent Office
Office européen des brevets

(11) **EP 1 386 793 A1**

(12) **EUROPEAN PATENT APPLICATION**
published in accordance with Art. 158(3) EPC

(43) Date of publication:
**04.02.2004 Bulletin 2004/06**

(21) Application number: **02717096.8**

(22) Date of filing: **10.04.2002**

(51) Int Cl.[7]: **B60R 21/26**

(86) International application number:
**PCT/JP2002/003572**

(87) International publication number:
**WO 2002/083464 (24.10.2002 Gazette 2002/43)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.04.2001 JP 2001110808**

(71) Applicant: **Nippon Kayaku Kabushiki Kaisha**
**Tokyo 102-8172 (JP)**

(72) Inventors:
- **KUBO, Dairi**
  **Himeji-shi, Hyogo 670-0893 (JP)**
- **TAGUCHI, S.,**
  **Himeji Factory of Nippon Kayaku K.K.**
  **Himeji-shi, Hyogo 679-2123 (JP)**
- **SATO, E., Himeji Factory of Nippon Kayaku K.K.**
  **Himeji-shi, Hyogo 679-2123 (JP)**

(74) Representative: **Intès, Didier Gérard André et al**
**Cabinet Beau de Loménie,**
**158, rue de l'Université**
**75340 Paris Cedex 07 (FR)**

## (54) GAS GENERATOR

(57) A gas generator comprising two or three or more chambers partitioned by two or three or more partition plates, gas generants filled in at least one of the chambers, and gas flow rate regulating means comprising a plurality of holes formed in each of the partition plates, wherein there are provided two or three or more gas flow rate regulating means located on a pathway through which gas generated from the gas generants is discharged from a combustion chamber to an outside of the gas generator, and wherein a second smallest opening area B of each of the gas flow rate regulating means is determined by the relation with A, where "A" is the smallest opening area of the gas flow rate regulating means.

FIG. 1

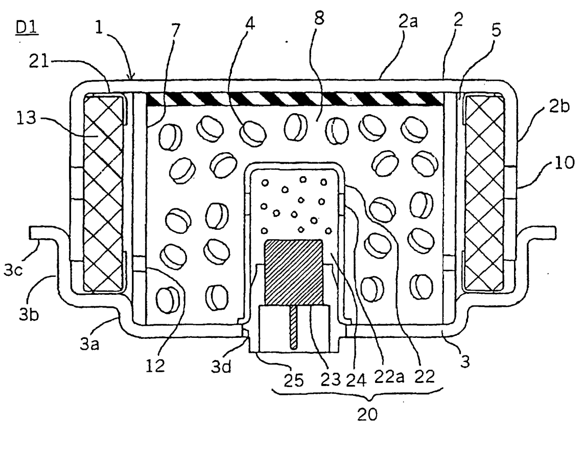


EP 1 386 793 A1

## Description

### Technical Field

The present invention relates to a gas generator for actuating an airbag system of a vehicle, for example.

### Background Art

An airbag is known as an occupant restraint system for protecting occupants in a vehicle from a vehicle collision shock. The airbag is put into operation by a large quantity of high temperature and high pressure gas generated from a gas generator. There are two main types of gas generating modes of the gas generator. One is a pyro type in which the gas generated is produced solely by the burning of a solid gas generant. Another is a hybrid type in which the gas generated is produced by using a chamber in which high pressure gas is held in combination with a gas generator in which the gas is generated from a small amount of explosive compound to feed heat to the high pressure gas. The conventional gas generators generate the gas even after an occupant comes up against the expanded airbag, thus leading to the disadvantage of providing a poor collision shock absorbing performance of the airbag and providing an increased frequency of bodily-injury accident. This is due to the conventional gas generator's inherent characteristics of generating a large amount of gases rapidly at the initial stage of the operation and keeping on discharging the gases gently even thereafter.

To solve these disadvantages, the so-called soft inflation technique has been proposed. Usually, the combustion performance of the gas generator is determined by a 60 liter tank test. In the 60 liter tank test, a pressure curve is obtained by a pressure-time behavior of the gas generator set in a 60 liter steel container when ignited.

When an vehicle comes into collision, it usually takes about 50-100ms until the occupant comes into collision with a steering wheel or a dash board. If the airbag is not inflated completely by the time the occupant comes into collision therewith, the airbag will keep on expanding even after the occupant is already received by the airbag. This may cause an increased frequency of bodily-injury accident. The gas generator that is believed to have a high frequency of bodily-injury accident describes a pressure curve showing that the pressure rises sharply at the initial stage in the time range of 5-20ms and also keeps on rising gently even in the time range in excess of 50-60ms. Accordingly, the pressure curve describes an upcurved arc on the whole.

A variety of methods have been proposed for obtaining the means to provide the performances, including modification in structure such as, for example, a single chamber of the gas generator in which the gas generant is filled being divided into two chambers or two gas generators being combined, and modification in shape of the gas generant.

However, these methods involve the problems of providing insufficient effects or increased costs.

It is the object of the present invention to provide a gas generator that can provide a reduced frequency of bodily-injury accident at reduced costs.

### Disclosure of the Invention

After having devoted themselves to the study to solve the problems mentioned above, the inventors have found that two or more gas flow rate regulating means are located on a pathway and also a ratio between areas of openings formed in the gas flow rate regulating means is prescribed, whereby an adequate combustion performance for the soft inflation is obtained, leading to the accomplishment of the present invention.

The present invention is characterized in providing:

(1) A gas generator comprising two or three or more chambers partitioned by two or three or more partition plates, gas generants filled in at least one of the chambers, and gas flow rate regulating means comprising one or two or more holes formed in each of the partition plates, wherein there are provided two or three or more gas flow rate regulating means located on a pathway through which gas generated from the gas generants is discharged from a combustion chamber to an outside of the gas generator, and a second smallest opening area B of opening areas of each of the gas flow rate regulating means is adjusted to satisfy the following formula (1):

$$A \leqq B < 1.5A \qquad \text{Formula (1)}$$

where "A" is the smallest opening area of the gas flow rate regulating means (a total area of the openings forming the gas flow rate regulating means).

(2) The opening area B of the gas flow rate regulating means is adjusted to be in the range between A and 1.3A.

(3) The hole of the gas flow rate regulating means having the opening area A or the opening area B communicates between the chamber and an outside of the gas generator.

(4) At least a part of the gas generants comprise a solid gas generant, and filtering member for collecting solid residuals that remain after the gas generants are burned are provided in the combustion chamber.

(5) The filtering member for collecting the solid residuals is a woven metal sheet, an expanded metal or a punching plate.

(6) Any of the gas flow rate regulating means are able to adjust the opening area through use of pressure.

(7) The means for adjusting the opening area through use of pressure is effected by change in breaking pressure of a sealing tape stuck on the gas flow rate regulating means.

(8) The means for adjusting the opening area through use of pressure are effected by combination of the gas flow rate regulating means having different opening areas.

(9) At least a part of the gas generants comprise a solid gas generant, and the solid gas generant is adjusted in form to satisfy the following relations:

When z = 0.4, F(z) = 0.6-0.9 and

When z = 0.6, F(z) = 0.5-0.8

where F(z) = a surface area of gas generant in burning/ an initial surface area of gas generant, and

z = weight of gas generant burned/ initial weight of gas generant.

(10) The gas generants are formed into a columnar form or tablet form by tableting.

### Brief Description of the Drawings

FIG. 1 is a schematic sectional view of an example of a gas generator according to the present invention. FIG. 2 is a schematic sectional view of an example of a gas generator according to the present invention. FIG. 3 is a schematic sectional view of an example of a gas generator according to the present invention. FIG. 4 is a schematic sectional view of an example of a gas generator according to the present invention and is also a schematic sectional view of the gas generators used in Examples and Comparative Examples. FIG. 5 is a schematic sectional view of an example of a gas generator according to the present invention. FIG. 6 is a graph showing a 60 liter tank test in Example 1. FIG. 7 is a graph showing a 60 liter tank test in Example 2. FIG. 8 is a graph showing a 60 liter tank test in Comparative Example 1. FIG. 9 is a graph showing a 60 liter tank test in Comparative Example 2. FIG. 10 is a table showing areas of openings of the gas generators used in Examples and Comparative Examples. FIG. 11 is a table showing compiled test results of the 60 liter tank tests of Examples and Comparative Examples.

### Best Mode for Carrying out the Invention

A gas generator of the present invention has at least two chambers including a chamber in which gas generant is filled and at least one partition wall for fractioning/partitioning the chambers. Each partition wall is provided with a plurality of holes formed to communicate between the chambers or between the chamber and an outside of the gas generator. The plurality of holes serves as gas flow rate regulating means to regulate a flow rate of the gas flowing through the partition wall. The gas flow rate regulating means are disposed at two or more locations on the pathway through which the gas generated from the gas generants is discharged from the combustion chamber to the outside of the gas generator. Regarding the opening area of the at least two gas flow regulating means (a total opening area of the holes formed as the gas flow rate regulating means), a ratio between a smallest opening area and a second smallest opening area of the gas flow rate regulating means is defined so that the effect of the present invention can be provided. As long as the gas generator takes this construction, the gas generator can take any form without being limited to any particular shape and also can have any number of combustion chambers without any particular limitation.

It should be noted that the term of "combustion chamber" used herein means the chamber in which the gas generant is filled. The gas generant used is not limited to the so-called general solid gas generant. The gas generants that can be used include, for example, combination of a solid gas generant and an inert gas, such as a hybrid type gas generant, combination of a solid gas generant, an oxidizing gas and an inflammable gas, and an inflammable liquid. The solid gas generant is preferably used (the term "gas generant" appearing hereinafter means the solid gas generant, unless otherwise specified). The gas generants are not contained in any other chambers than the combustion chambers. It is to be noted that initiators to initiate generation of gas from the gas generants, such as enhancer agents, which are ignited by ignition of an igniter that is ignited under control of signals from a sensor or by flames of the igniter are not defined as the gas generant in this description. Accordingly, the chamber in which only the initiators are contained is not defined as the combustion chamber, provided, however, that the initiators and the gas generants are both contained in the same chamber. A chamber for containing only the initiators (an initiator chamber) may be formed in the gas generator by use of a partition wall. It should be noted, however, that if the gas generated in the combustion chamber does not pass through such an initiator chamber until it is discharged to the outside of the gas generator, any holes formed in the partition wall partitioning the initiator chamber cannot form the gas flow rate regulating means defined in the description.

Further detailed description thereon will be given below.

The opening area of the gas flow rate regulating means of the present invention is properly adjusted so that the gas generator can provide an adequate combustion performance. The opening area of the gas flow rate regulating means is determined depending on the burning characteristics of the gas generants used, and the burning characteristics of the gas generants varies depending on the shape and composition of the gas generants. In general, for the gas generants which are burned at a fast pace or for the gas generants having a large surface area, an increased opening area of the gas flow rate regulating means is provided. On the other hand, for the gas generants which are burned at a slow pace or for the gas generants having a small surface area, a reduced opening area of the gas flow rate regulating means is provided. The adjustment of the adequate opening area of the gas flow rate regulating means can be effected by arranging the gas flow rate regulating means at any location on the pathway through which the generated gas is discharged from the combustion chamber to the outside of the gas generator.

In the gas generator of the present invention, it is preferable that a second smallest opening area B of the gas flow rate regulating means is adjusted to fall in the range of $1\times A$ to $1.5\times A$, or further preferably in the range of $1\times A$ to $1.3\times A$, where "A" is the smallest opening area of the gas flow rate regulating means, located at the at least two locations on the pathway through which the generated gas is discharged from the combustion chamber to the outside of the gas generator, to regulate the gas flow rate (or a randomly chosen one when there are a plurality of gas flow rate regulating means having the same opening area) and "B" is the second smallest opening area of the gas flow rate regulating means (other opening area than A when there are a plurality of gas flow rate regulating means having the same opening area, provided, however, that a randomly chosen one when there are a plurality of the gas flow rate regulating means). This can provide the result that the gas generator describes the pressure curve showing that the pressure rise comes to an end by the passage of time of 50-60ms, so that the pressure curve describes a rectilinear or downward-curved arc.

The holes, which form the gas flow rate regulating means, may take any form, including a circular form and a quadrangle form. In addition, all the holes arranged in a single chamber (a single partition wall) are not necessarily required to have the same shape.

It is preferable that the volume of the space formed up to the partition wall having the gas flow rate regulating means of the smallest opening area and the volume of the space formed up to the partition wall having the gas flow rate regulating means of a second smallest opening area are adjusted to have a volume ratio a:b between 1:2 and 10:1, where "a" is one of the two volumes of a group of chambers containing the gas generants and "b" is another of them. Also, it is preferable that the holes of the gas flow rate regulating means having the opening area (smallest one) or the holes of the gas flow rate regulating means having the second smallest opening area (second smallest one) are formed to communicate between the chambers and the outside of the gas generator.

A sealing tape made of aluminum may be stuck to the holes, in order to protect the interior of the gas generator from moisture. While the sealing tape may be applied to any of the holes, it is preferable that the sealing tape is applied to the outermost holes. The sealing tape is broken by the gas pressure from the gas generants, whereby the holes are opened.

If the gas generants which produce a large quantity of solid residuals or discharge a large quantity of combustion heat by burning are used in the gas generator (for example if the solid gas generants are used), a filtering member for collecting the solid residuals and cooling the high temperature gas should preferably be used. The filtering member can serve to prevent the holes from being clogged by the solid residuals. The filtering member may be disposed at any locations in the gas generator, and any number of filtering members may be used without any particular limitation. In addition, the filtering member may take any shape, including a quadrangle shape, a disc-like shape, a cylindrical shape, and a triangular-pyramid shape.

The filtering member is formed from steel products of iron and the like, including, for example, a woven wire, an expanded metal and a punched plate. Preferably, the collecting means has a mesh size of 0.5mm-5.0mm, or more preferably 0.7mm-4.0mm.

In general, the gas generant changes its combustion characteristics, depending on temperature. In a low temperature, the pressure rises at a slow pace, so that the airbag expands gently, while on the other hand, in a high temperature, the pressure rises at a fast pace, so that the airbag expands rapidly. Due to this, it was difficult to adjust the output of the gas generator adequately in a wide temperature range from a low temperature range to a high temperature range.

According to the gas generator of the present invention, any of the at least two gas flow rate regulating means is provided with means for adjusting the opening area by the pressure generated (opening area adjusting means) so that the output of the gas generator can be well adjusted in the wide temperature range from high temperature to low temperature. The opening area adjusting means operates to adjust the opening area of the gas flow rate regulating means so that in a low temperature, the opening area of the gas flow rate regulating means can be reduced, while on the other hand, in a high temperature, the opening area of the gas flow rate regulating means can be increased. This enables the change of the combustion characteristics of the gas generants in dependence on the temperature to reduce. As a result of this, in a low temperature, the opening area is reduced and thereby the percentage increase of the pressure in the combustion chamber increase, and as such can allow the combustion velocity of the gas generants to increase. On the other hand, in a high temperature, the opening area is increased and thereby the percentage increase of the pressure in the combustion chamber decrease, and as such can allow the combustion velocity of the gas generants to reduce. This can provide an improved combustion performance of the gas generator with little temperature change.

The opening area adjusting means that may preferably be used include, for example, methods or means for changing a breaking strength against pressure of the sealing tape stuck on the holes.

The methods for changing the breaking strength of the sealing tape against pressure include a method of changing thickness of the sealing tape and a method of changing material of the sealing tape. Also, a method of changing the opening area of the holes is preferable. When the same tape is used for the holes having a different opening area, the sealing tape is broken with ease under a low pressure at the holes having a larger opening area than at the holes having a smaller opening area and the holes having a smaller opening area are opened under a higher pressure.

The methods using the both means in combination are also effective.

By changing the breaking strength of the sealing tape against pressure, the holes on which the sealing tape of the lowest breaking strength against pressure is stuck are opened, first, and, then, the holes on which the sealing tape of the second lowest breaking strength against pressure is stuck are opened. Thus, the opening area of the gas flow rate regulating means can be adjusted through the use of the pressure.

Further detailed description will be given on the opening area adjusting means. The critical pressure to open the holes can be adjusted in two or more stages. The adjustment of the opening area adjusting means will be described, taking a three-stage adjustment of the opening area of the gas flow rate regulating means under the conditions of three temperature stages of -40°C, 25°C and 85°C for instance. Where the maximum pressures in the combustion chamber of the gas generator (having no opening area adjusting means) which is put in operation in the temperatures cited above are expressed as Pmax (-40°C), Pmax (25°C) and Pmax (85°C), respectively, it is preferable that the breaking pressures of the respective holes are set so that some holes can be opened at a pressure of not higher than Pmax (-40°C); other holes can be opened at a pressure higher than Pmax (-40°C) and lower than Pmax (25°C); and still other holes can be opened at a pressure higher than Pmax (25°C) and lower than Pmax (85°C), respectively.

Description on the gas generants used in the gas generator of the present invention will be given. The gas generant preferably used is a non-azide compound comprising combination of a nitrogen-containing organic compound used as a fuel, such as guanidine nitrate, tetrazoles and nitroguanidine, and an oxidizing agent comprising an inorganic compound, such as strontium nitrate, basic copper nitrate and ammonium nitrate. The gas generant may comprise a binder. The binders that may be used include, for example, synthetic hydrotalcite. Preferably, the gas generants are shaped into a columnar form, a spherical form, a rectangular parallelepiped form and the like so that they can be mass-produced at reduced costs. The gas generants may be formed into a disk-like form having a thickness smaller than a diameter, or a hollow-cylinder form having a single hole or a number of holes, though they have the disadvantages that the strength of the molded products is low; that due to its complicated shape, a cost rise is caused; and that the filling density of the gas generants is low.

It is to be noted here that an amount of the gas generated from the gas generants can be estimated to some extent from the form of the gas generants, based on the general combustion theory of explosives (Cf. Energy Material Handbook, first edition, at page 320 issued from Kyoritsu Shuppan Co., Ltd.). The gas generants having a simple form typified by the columnar form as mentioned above can be produced at low costs, but on the other hand, they have the burning characteristics that along with the burning, an amount of gas generated reduces. When this type of gas generants are used in the general type of gas generator, a large amount of gas is generated at the initial stage of the burning, and as such causes a sharp pressure rise in the 60 liter tank test and provided the gas generator having a harmful influence.

In contrast, the gas generator of the present invention enables the soft inflation technique to be used even for the gas generants having this burning characteristic. This can offer an increased number of options for the form of the gas generants and enables the gas generants to be produced at reduced costs.

Thus, the gas generator of the present invention can be suitably used for the gas generants which are formed into a shape to satisfy the following relations but are not suitable for the adjustment of the output of the gas generator, though they can offer a lot of manufacturing merits.

When $z = 0.4$, $F(z) = 0.6\text{-}0.9$ and

When $z = 0.6$, $F(z) = 0.5\text{-}0.8$

where F(z) = a surface area of gas generant in burning/ an initial surface area of gas generant, and

z = weight of gas generant burned/ initial weight of gas generant.

The relationship equations given above show that the surface area of the gas generant is reduced to 0.6-0.9 or 0.5-0.8 in terms of a total amount of the gas generated in an intermediate stage of the burning of the gas generant in which z =0.4 or 0.6, as compared with the initial surface area of the gas generant (at the initial stage of the burning of the gas generant). This indicates that the gas generant having a form to be burned from its surface has the tendency to reduce a burning region (an amount of gas generated) per unit of time. A columnar form or a tablet form can be cited as a typical form to satisfy these relationships. A disk-like form and a macaroni-like form (a hollow-cylinder form with a single hole) are also known as the form of the gas generants. These forms provide decrease in reduction of the surface area resulting from the burning. According to the relationship equations given above, when z = 0.4, F(z) exceeds 0.9 and can be approximated by 1. The gas generant having a lotus-root form (a hollow-cylinder form with a plurality of holes) has the tendency to allow the surface area to increase with the burning. According to the relationship equations given above, when z = 0.4, F(z) exceeds 1. It is needless to say that the gas generants that do not satisfy the relationship equations given above can be used in the gas generator of the present invention. It can be said that it is the excellent characteristics of the gas generator of the present invention that the gas generants that do not satisfy the relationship equations given above can all be used in the gas generator of the present invention, as is the case with the gas generant having the disk-like form.

Next, certain examples of the embodiments of the gas generator of the present invention will be described with reference to FIGS. 1-5.

In FIG. 1, there is shown a sectional view of a gas generator according to a first embodiment of the present invention. In FIG. 1, the gas generator D1 is designed to expand and inflate the driver seat airbag. The gas generator D1 comprises a short cylindrical housing 1; an inner cylinder 7, fitted in the housing 1, for partitioning a combustion chamber 8; a filtering member 13 arranged at an outside of the inner cylinder 7 fitted in the housing 1; and an ignitor device 20 for burning gas generants 4 of a tablet form filled in the combustion chamber 8.

The housing 1 has a closed structure formed by an upper casing 2 and a lower casing 3 being joined together by welding.

The upper casing 2 has a cup-like shape, having a cylindrical side wall 2b around which a plurality of gas discharge holes 10 are opened to a direction perpendicular to the axis of the housing 1.

The lower casing 3 has a dish-like shape, having a first cylindrical side wall 3a to set the inner cylinder 7 in place, a second cylindrical side wall 3b joined to an end of the cylindrical side wall 2b of the upper casing 2, and a circumferentially outwardly extending flange 3c at an outer circumferential portion thereof. The lower casing 3 has a mounting portion 3d, formed at a center thereof, for mounting the ignitor device 20.

The inner cylinder 7 disposed the housing 1 extends across the interior of the housing 1 from the upper casing 2 to the lower casing 3 and contacts with an inner periphery of the first cylindrical side wall 3a at a end portion thereof on the lower casing 3 side. Also, the inner cylinder 7 has gas discharge holes 12 to communicate between an interior of the inner cylinder 7 and an exterior of the same which holes are formed therearound to be opened to a direction perpendicular to the axis of the housing 1.

The interior of the inner cylinder 7 is formed as the combustion chamber 8 filled with the gas generants 4. The ignitor device 20 is disposed in the lower casing 3 at the center of the combustion chamber 8.

A filtering chamber 5 is defined between an outer periphery of the inner cylinder 7 and an inner periphery of the cylindrical side wall 2b of the upper casing 2, and a filtering member 13 is set in place in the filtering chamber 5 by two fixing members 21 abutting with the upper casing 2 and the lower casing 3, respectively.

The filtering member 13 is produced at a low price, for example, by forming it from a knitted or woven wire sheet or an aggregation of crimped metal wire rods. The filtering member 13 set in place by the fixing members 21 situated at the opposite ends of the filtering member 13 has a size to extend across the whole area between the inside of the upper casing 2 and the inside of the lower casing 3. The gas generated by the burning of the gas generants 4 filled in the combustion chamber 8 arranged interior of the filtering member 13 is discharged out of the gas generator D1 through the filtering member 13.

The ignitor device 20 comprises enhancer agents 24, an enhancer agent cup 22 for containing the enhancer agents 24, a squib 23 and a squib holder 25 for holding the squib. The squib holder 25 for holding the squib 23 is fixed in place so that the squib 23 fitted in the squib holder 25 can confront the enhancer agents 24. The squib holder 25 is fixedly mounted on the mounting portion 3d of the lower casing 3 to set the ignitor device 20 in the lower casing 3. The enhancer agent cup 22 has a cylindrical side wall around which enhancer holes 22a are opened to communicate with the interior of the combustion chamber 8 filled in the gas generants 4.

While the squib 23 illustrated in FIG. 1 is a pin-type squib, another type of squib such as a pig-tail squib may be used.

It should be noted further that the first gas flow rate regulating means is formed by the gas passage holes 12 formed around the inner cylinder 7 formed as the first partition wall to form the combustion chamber 8 in the housing 1. The second gas flow rate regulating means is formed by the plurality of the gas discharge holes 10 formed around the cylindrical side wall 2b of the upper casing 2 formed as the second partition wall which forms the filtering chamber 5 together with the inner cylinder 7 at the outside of the combustion chamber 8. In addition, the opening area S 1 of the first gas flow rate regulating means and the opening area S2 of the second gas flow rate regulating means are adjusted to establish the relation of $S1 \leqq S2 < 1.5 \times S1$ or $S2 \leqq S1 < 1.5 \times S2$.

The gas generator D1 thus constructed is built in the airbag module filled in the steering wheel. The ignitor device 20 of the gas generator D1 is connected with a control unit connected with connectors, not shown, provided on the vehicle side, respectively. The control unit comprises a collision sensor (acceleration sensor) for detecting a collision of a vehicle, a charge pump circuit for applying an electric current to the squib 23 of the ignitor device 20, a backup condenser, and a squib (an igniter) drive circuit. The control unit is controlled by a microcomputer.

When a vehicle collision is detected by the collision sensor (not shown), only the squib 23 is put into operation (ignited by the application of the electric current to the squib) via the squib drive circuit connected with the igniter 23 to ignite the squib 23 first, and, then, the gas generants 4 in the combustion chamber are burned by the ignition of the squib 23, whereby the gas generator D1 connected with the control unit generates high temperature gas.

The high temperature gas generated in the combustion chamber 8 is spurted into the filtering chamber 5, passing through the first gas flow rate regulating means formed by the gas passage holes 12 formed around the inner cylinder 7 of the first partition wall arranged on a pathway through which the high temperature gas is discharged from the combustion chamber to the outside of the gas generator. At this time, since the opening area S 1 of the first gas flow rate regulating means is set to an adequate area, the pressure in the combustion chamber 8 is kept at a proper pressure for the burning of the gas generants 4.

Sequentially, the gas flowing into the filtering chamber 5 flows into the filtering member 13, for slag collection and cooling of the gas thereat. Then, the gas passes through the second gas flow rate regulating means formed by the gas discharge holes 10 formed around the cylindrical side wall 2b of the upper casing 2 of the second partition wall arranged on a pathway through which the gas is discharged from the combustion chamber to the outside of the gas generator and, thereafter, is discharged out of the gas generator D1. At this time, since the opening area S2 of the second gas flow rate regulating means is adjusted with respect to the opening area S1, to establish the relation mentioned above, the gas generator D1 permits the pressure to rise linearly in the 60 liter tank test, thus providing an optimum gas discharge performance for the gas generator for the airbag. Although the gas generants 4 used in the gas generator D1 has a tablet form whose burning area is significantly reduced by the burning, the form of the gas generants has little influence on the performance of the gas generator D1.

Next, the gas generator of another embodiment of the present invention will be described with reference to FIG. 2.

The gas generator D2 shown in FIG. 2 is different in structure from the gas generator D1 shown in FIG. 1 in that the combustion chamber 8 and the filtering chamber 5 are partitioned into upper and lower combustion chambers 8a, 8b and upper and lower filtering chambers 5a, 5b by partition plates 15 and 16, respectively. As the remaining parts are the same as those of the gas generator D1 of FIG. 1, the same reference characters as those in FIG. 1 are given to the corresponding parts, with detailed explanation thereon omitted.

The partition plate 15 for partitioning the combustion chamber 8 into the upper and lower chambers is provided around the inner periphery of the inner cylinder 7, to partition the combustion chamber 8 into the upper combustion chamber 8a and the lower combustion chamber 8b. Two igniter devices 20a, 20b for burning the gas generants 4 are disposed in the combustion chambers 8a, 8b, respectively. The partition plate 15 has, at a generally center portion thereof, a cylindrical portion 15a extending toward the lower casing 3 to join to a mounting portion 25a of the igniter device 20a.

The partition plate 16 for partitioning the filtering chamber 5 into upper and lower filtering chambers is provided between the outer periphery of the inner cylinder 7 and the inner periphery of the cylindrical side wall 2b of the upper casing 2, to partition the filtering chamber into an upper filtering chamber 5a and a lower filtering chamber 5b. Filtering members 13a, 13b are provided in the upper and lower filtering chambers 5a, 5b, respectively.

The inner cylinder 7 has the gas passage holes 12a, 12b which are opened to communicate between the combustion chambers 8a, 8b and the filtering chambers 5a, 5b, respectively. Further, the cylindrical side wall 2b of the upper casing 2 has the gas discharge holes 10a, 10b to communicate between the filtering chambers 5a, 5b and an exterior of the gas generator D2 which holes are opened to a direction perpendicular to the axis of the housing 1.

In the gas generator D2, the first gas flow rate regulating means (hereinafter it is sometimes referred to as the first gas flow rate regulating means "a" for the combustion chamber 8a, and the first gas flow rate regulating means for the combustion chamber 8b is sometimes referred to as the first gas flow rate regulating means "b", in order to discriminate therebetween)(the same applies to the second gas flow rate regulating means mentioned later) is formed by the gas passage holes 12a, 12b formed around the inner cylinder 7 formed as the first partition wall to form the combustion chamber 8 in the housing. The second gas flow rate regulating means is formed by the plurality of the gas discharge holes 10 formed around the cylindrical side wall 2b of the upper casing 2 formed as the second partition wall which forms the filtering chamber 5 together with the inner cylinder 7 at the outside of the combustion chamber 8. In addition, at least either of or preferably both of the relation between the opening area S1 of the first gas flow rate regulating means "a" and the opening area S2 of the second gas flow rate regulating means "a" and the relation between the opening area S1 of the first gas flow rate regulating means "b" and the opening area S2 of the second gas flow rate regulating means "b" are adjusted to be $S1 \leqq S2 < 1.5 \times S1$ or $S2 \leqq S1 < 1.5 \times S2$.

This can provide the result that the gas generator D2 permits the pressure to rise linearly in the 60 liter tank test, thus providing an optimum gas discharge performance for the gas generator for the airbag. Although the gas generants 4 used in the gas generator D2 has a tablet form whose burning area is significantly reduced by the burning, the form of the gas generants has little influence on the performance of the gas generator D2.

Next, the gas generator of still another embodiment of the present invention will be described with reference to FIG. 3.

The gas generator D3 shown in FIG. 3 is different in structure from the gas generator D2 shown in FIG. 2 in that there is not provided the partition plate 16. The remaining parts are the same as those of the gas generator D2 of FIG. 2. Further, since there is not provided the partition plate 16, the circumferential structure outside of the inner cylinder 7 is the same as that of the gas generator D1 shown in FIG. 1. Accordingly, the same reference characters as those in FIG. 1 and 2 are given to the corresponding parts, with detailed explanation thereon omitted.

In the gas generator D3, the first gas flow rate regulating means is formed by the gas passage holes 12a, 12b formed around the inner cylinder 7 formed as the first partition wall to form the combustion chamber 8 in the housing. The second gas flow rate regulating means is formed by the plurality of the gas discharge holes 10 formed around the cylindrical side wall 2b of the upper casing 2 formed as the second partition wall which forms the filtering chamber 5 together with the inner cylinder 7 at the outside of the combustion chamber 8. In addition, the sum S 1 of the opening area of the first gas flow rate regulating means "a" and the opening area of the first gas flow rate regulating means "b" and the opening area S2 of the second gas flow rate regulating means are adjusted to establish the relation of $S1 \leqq S2 < 1.5 \times S1$ or $S2 \leqq S1 < 1.5 \times S2$.

This can provide the result that the gas generator D3 permits the pressure to rise linearly in the 60 liter tank test, thus providing an optimum gas discharge performance for the gas generator for the airbag. Although the gas generants 4 used in the gas generator D3 has a tablet form whose burning area is significantly reduced by the burning, the form of the gas generants has little influence on the performance of the gas generator D1.

Next, the gas generator of yet another embodiment of the present invention will be described with reference to FIG. 4.

In FIG. 4, there is shown a sectional view of a gas generator according to an embodiment of the present invention. In FIG. 4, the gas generator P1 is designed to mainly expand and inflate the passenger seat airbag.

The gas generator P1 comprises the housing 1; the ignitor device 20 fitted in the housing 1 at one axial end thereof; a partition plate 37 for partitioning the housing 1 into a combustion chamber 38 and a filtering chamber 35; and the gas generants 4 of a tablet form filled in a space around the inside wall of the combustion chamber 38.

The housing 1 comprises an outer cylinder 32 opening at opposite ends thereof, a cover plate 36 for closing the opening at one end of the outer cylinder 32 and a cover member 34 at the other end of the same. The housing 1 has an elongated cylindrical form closed at the opposite ends by the cover plate 36 and the cover member 34. The interior space of the housing 1 hermetically sealed is partitioned into two chambers of the combustion chamber 38 and the filtering chamber 35 by the partition plate 37. The gas generants 4 are filled in the combustion chamber 38, and the filtering member 33 of a hollow cylinder form is housed in the filtering chamber 35.

The partition plate 37 has a stepped portion and a gas passage hole 42 formed on an axis of the housing 1. The gas passage hole 42 is formed to communicate between the combustion chamber 38 and the filtering chamber 35. The partition plate 37 is set in place in the outer cylinder 32 by crimping the outer cylinder 32 onto the partition plate 37 from the outside, first, and, then, is fixed by welding.

The gas passage hole 42 is closed by a burst plate 43 stuck on the partition plate 37. The burst plate 43 is formed from a metal foil, such as aluminum foil, and serves to protect the interior of the combustion chamber 38 from moisture and adjust the inner pressure of the combustion chamber.

The outer cylinder 32 has gas discharge holes 11, formed at a portion thereof on the filtering chamber 35 side, to communicate between an interior of the filtering chamber 35 and an exterior of the gas generator P1. The gas discharge holes are formed on the outer cylinder 32 at regular intervals in the axial direction and the circumferential direction of the outer cylinder 32.

The ignitor device 20 comprises enhancer agents 28, an enhancer agent cup 27 having a nozzle portion for containing the enhancer agents 28, a squib 23 and a squib holder 26 for holding the squib. The squib holder 26 for holding the squib 23 is fixed in place so that the squib 23 fitted in the squib holder 26 can confront the enhancer agents 28. The cover member 34 has a mounting portion 34d for mounting the igniter device 20 so that when the squib holder 26 is fixedly mounted on the mounting portion 34d, the ignitor device 20 can be set in the cover member 34. The nozzle portion of the enhancer agent cup 27 has a side wall around which enhancer holes 27a are opened along the axial direction and the circumferential direction, to communicate with the interior of the combustion chamber 38.

A filtering member 33 is produced at a low price, for example, by forming it from a knitted or woven wire sheet or an aggregation of crimped metal wire rods. The filtering member 33 is disposed to substantially extend across the whole area between the partition plate 37 and the cover plate 36. The gas generated by the burning of the gas generants 4 filled in the combustion chamber 38 is discharged out of the gas generator P1 through the filtering member 33.

A cylindrical partition member 39 is set in the combustion chamber 38, with one end portion thereof fitted onto the enhancer agent cup 27 and the other end portion fitted onto the stepped portion of the partition plate 37, to extend therebetween. The gas generants 4 are filled in the space between the outside around the partition member 39 and the inside around the outer cylinder 32. The partition member 39 is formed from a woven metal sheet having a mesh size sufficient for the gas passage holes 42 and the gas discharge holes 11.

The first gas flow rate regulating means is formed by the gas passage holes 42 formed in the partition plate 37 formed as the first partition wall to form the combustion chamber 38 in the housing 1. The second gas flow rate regulating means is formed by the plurality of the gas discharge holes 11 formed around the outer cylinder 32 formed as the second partition wall which forms the filtering chamber 35 together with the partition plate 37 at the outside of the combustion chamber 38. In addition, the opening area S 1 of the first gas flow rate regulating means and the opening area S2 of the second gas flow rate regulating means are adjusted to establish the relation of $S1 \leqq S2 < 1.5 \times S1$ or $S2 \leqq S1 < 1.5 \times S2$.

Next, operation of the gas generator P1 will be described with reference to FIG. 4.

When an vehicle collision is detected by the collision sensor, the squib 23 of the igniter device 20 of the gas generator P1 is put into operation by the application of the electric current to the squib. Flames caused by the ignition of the squib 23 are spurted into the enhancer agent cup 27 to ignite and burn the enhancer agents 28, whereby heat energies including flames and high temperature gas are generated in the enhancer agent cup 27. The heat energies cause the burning to broaden over the enhancer agents 28 filled in the nozzle portion of the enhancer agent cup 27 instantaneously. The flames of the enhancer agents are spurted from the enhancer agent holes 27a into the space around the inside of the partition member 39, to ignite and burn the gas generants 4 through the partition member 39. As a result of this, the generation of gas is started. The gas generated by the burning of the gas generants 4 is spurted into the space around the inside of the partition member 39 again, passing through the partition member 39, to cause the pressure in the interior of the combustion chamber 38 to rise. When the pressure in the combustion chamber 38 reaches a predetermined pressure, the burst plate 43 provided at the partition plate 37 is burst. Then, the gas flows into the filtering chamber 35 through the first gas flow rate regulating means formed by the gas passage holes 42 formed in the partition wall 37 of the first partition wall. At this time, since the opening area S 1 of the first gas flow rate regulating means is set to an adequate area, the pressure in the combustion chamber 38 is kept at a proper pressure for the burning of the gas generants 4.

Sequentially, the high temperature gas flowing into the filtering chamber 35 passes through a hollow portion of the filtering member 33 in the filtering chamber 35 and then flows into the filtering member 33 from the whole axial region of the same, for slag collection and cooling of the gas thereat. Then, the gas passes through the second gas flow rate regulating means formed by the gas discharge holes 11 formed around the outer cylinder 32 of the second partition wall and is discharged out from the gas generator P1. At this time, since the opening area S2 of the second gas flow rate regulating means is adjusted with respect to the opening area S1, to establish the relation mentioned above, the gas generator P1 permits the pressure to rise linearly in the 60 liter tank test, thus providing an optimum gas discharge performance for the gas generator for the airbag. Although the gas generants 4 used in the gas generator P1 has a tablet form whose burning area is significantly reduced by the burning, the form of the gas generants has little influence on the performance of the gas generator P1.

Next, the gas generator of a further embodiment of the present invention will be described with reference to FIG. 5.

The gas generator P2 shown in FIG. 5 is different in structure from the gas generator P1 shown in FIG. 4 in that the filtering chamber is divided into two by a partition plate 45. The structures of the divided filtering chambers 35a, 35b on the opposite sides of the partition plate 45 are identical with that of the gas generator P1 shown in FIG. 4. In other words, it can be said that the gas generator P2 is formed by combining together two gas generators P1 with the cover plates 36 as a common member. Thus, those two gas generators P1 are discriminated in terms of an equivalent structure between the one extending from the partition plate 45 toward one axial end of the gas generator and another one extending form the partition plate 45 toward the other axial end, and two combustion chambers, filtering chambers, partition plates, gas passage holes formed in the partition plates are numbered as 38a and 38b, 35a and 35b, 37a and 37b, and 42a and 42b, respectively. Also, the gas discharge holes 11 formed around the outer cylinder 11 to communicate with the filtering chamber 35a are numbered as 11a, and the gas discharge holes 11 formed around the outer cylinder 11 to communicate with the filtering chamber 35b are numbered as 11b. The remaining parts are the same as those of the gas generator P1 of FIG. 4. Accordingly, the same reference characters as those of the gas generator P1 of FIG. 4 are given to the corresponding parts, with detailed explanation thereon omitted.

In the gas generator P2, the first gas flow rate regulating means "a" is formed by the gas passage hole 42a formed in the partition plate 37a formed as the first partition wall to form the combustion chamber 38a in the housing. Likewise, the first gas flow rate regulating means "b" is formed by the gas passage hole 42b formed in the partition plate 37b formed as the first partition wall to form the combustion chamber 38b in the housing. Also, the second gas flow rate regulating means "a" is formed by the plurality of the gas discharge holes 11a formed around the outer cylinder 32 formed as the second partition wall which forms the filtering chamber 35a together with the partition plate 37a at the outside of the combustion chamber 38a. Also, the second gas flow rate regulating means "b" is formed in the same manner. In addition, at least either of or preferably both of the relation between the opening area S1 of the first gas flow rate regulating means "a" and the opening area S2 of the second gas flow rate regulating means "a" and the relation between the opening area S1 of the first gas flow rate regulating means "b" and the opening area S2 of the second gas flow rate regulating means "b" are adjusted to be $S1 \leqq S2 < 1.5 \times S1$ or $S2 \leqq S1 < 1.5 \times S2$.

This can provide the result that the gas generator P2 permits the pressure to rise linearly in the 60 liter tank test, thus providing an optimum gas discharge performance for the gas generator for the airbag. Although the gas generants 4 used in the gas generator P2 has a tablet form whose burning area is significantly reduced by the burning, the form of the gas generants has little influence on the performance of the gas generator P2.

Although the examples using the solid gas generants as the gas generants (the pyro type) are shown in the gas generators D1-D3 and P1-P2 illustrated above, the present invention is not limited to any examples. The so-called hybrid type gas generant using the solid gas generants and inert gas in combination for producing the gas may be used in the present invention. Also, the solid gas generant and acidification gas, flammable gas, and flammable liquid may be used in the present invention. The pyro type of gas generants are preferably used in the present invention.

In the gas generators D1-D3 and P1-P2 shown in FIGS. 1-5, opening area adjusting means may be used in any of the gas flow rate regulating means (provided, however, that the gas flow rate regulating means comprises a plurality of gas passage holes or a plurality of gas discharge holes). This can provide the gas generator having the combustion performance of a reduced temperature change.

(Examples)

In the following, the effect of the present invention will be further detailed with reference to Examples.

| | |
|---|---|
| Gas generator used | Gas generator P1 shown in FIG. 4 |
| Gas generants used | |

Tablets produced in the following manner. 52.9 weight distribution (20μm in 50% particle diameter) of guanidine nitrate as a component of nitrogen-containing organic compound, 30.8 weight distribution (13μm in 50% particle diameter) of strontium nitrate as a component of an oxidizing agent, 10.9 weight distribution (13μm in 50% particle diameter) of basic copper nitrate and 2.7 weight distribution (10μm in 50% particle diameter) of synthetic hydrotalcite as a binder were dry-blended by using a V-blender to obtain the mixture. Then, 2.7 weight distribution of N-β-(aminoethyl)-γ -aminopropyl trimethoxysilane as a silane compound was diluted with 10 weight% of water per the mixture. Then, the aqueous solution was applied to the mixture by spraying it. Thereafter, the mixture was subjected to wet granulation to form it into granules having a particle diameter of not more than 1mm. Then, after the granules were dried at 90°C for 15 hours, they were press-molded into tablets having a diameter of 5mm and a height of 1.5mm with a rotary tableting machine. Thereafter, the tablets thus formed were dried at 105°C for 15 hours to obtain the gas generants used.

| | |
|---|---|
| Amount of gas generants used | 100g |
| Weight of filter used | 250g |
| Enhancer agents used | $B/KNO_3$; Weight: 2.0g |

Under the conditions mentioned above, the opening area of the gas passage holes 42 (the opening area S1 of the first gas flow rate regulating means) formed in the partition plate 37 formed as the first partition wall to form the combustion chamber 38 of the gas generator P1; and the opening area of the plurality of gas discharge holes 11 (the opening area S2 of the second gas flow rate regulating means) formed around the outer cylinder 32 formed as the second partition wall which forms the filtering chamber 35 together with the partition plate 37 at the outside of the combustion chamber 38 were adjusted to numeric values as shown in FIG. 10 to provide Examples 1 and 2 and Comparative Examples 1 and 2.

60 liter tank test:

The gas generators of Examples 1 and 2 and Comparative Examples 1 and 2 were subjected to the 60 liter tank test. The test results are shown in FIG. 11 and FIGS. 6-9 (the test result of Example 1 is shown in FIG. 6; that of Example 2 is shown in FIG. 7; that of Comparative Example 1 is shown in FIG. 8; and that of Comparative Example 2 is shown in FIG. 9).

It is found from the test results of FIGS. 11 and 6-9 that while the maximum pressure (Pmax) of the tank is approximately 400kPa in any of Examples and Comparative Examples, the time (tPmax) required for the inner pressure of the tank to reach the maximum pressure is in the range of 50-60ms in Examples, whereas the tPmax is in the range of 80-90ms in Comparative Examples. It is also found therefrom that the pressure of the tank after passage of 20ms (Pt20) is in the order of 160kPa at highest in Examples, whereas the Pt20 is higher than that in Comparative Examples. This indicates that Examples describe a tank pressure curve closer to a straight line than Comparative Examples, from which it can be seen that Examples can provide an optimum gas discharge performance for the gas generator for the airbag.

**Capability of Exploitation in Industry**

As evident from the foregoing, the gas generator of the present invention enables the soft inflation technique to be provided at reduced costs and also ensures that the energy output is reliably produced in a wide temperature range.

**Claims**

1. A gas generator comprising two or three or more chambers partitioned by two or three or more partition plates, gas generants filled in at least one of the chambers, and gas flow rate regulating means comprising one or two or more holes formed in each of the partition plates, wherein there are provided two or three or more gas flow rate regulating means located on a pathway through which gas generated from the gas generants is discharged from a combustion chamber to an outside of the gas generator, and a second smallest opening area B of the gas flow rate regulating means is adjusted to satisfy the following formula (1):

$$A \leqq B < 1.5A \qquad \text{Formula (1)}$$

   where "A" is the smallest opening area of the gas flow rate regulating means (a total area of the openings forming the gas flow rate regulating means).

2. The gas generator according to Claim 1, **characterized in that** the opening area B of the gas flow rate regulating means is adjusted to be in the range between A and 1.3A.

3. The gas generator according to Claim 1 or 2, **characterized in that** the hole of the gas flow rate regulating means having the opening area A or the opening area B communicates between the chamber and an outside of the gas generator.

4. The gas generator according to any of the preceding Claims, **characterized in that** at least a part of the gas generants comprise a solid gas generant, and **in that** filtering member for collecting solid residuals that remain after the gas generants are burned, are provided in the combustion chamber.

5. The gas generator according to Claim 4, **characterized in that** the filtering member for collecting the solid residuals is a woven metal sheet, an expanded metal or a punching plate.

6. The gas generator according to any of the preceding Claims, **characterized in that** any of the gas flow rate regulating means are able to adjust the opening area through use of pressure.

7. The gas generator according to Claim 6, **characterized in that** the means for adjusting the opening area through use of pressure are effected by change in breaking pressure of a sealing tape stuck on the gas flow rate regulating means.

**8.** The gas generator according to Claim 6, **characterized in that** the means for adjusting the opening area through use of pressure are effected by combination of the gas flow rate regulating means having different opening areas.

**9.** The gas generator according to any of the preceding Claims, **characterized in that** at least a part of the gas generants comprise a solid gas generant, and wherein the solid gas generant is adjusted in form to satisfy the following relations:

When z = 0.4, F(z) = 0.6-0.9 and
When z = 0.6, F(z) = 0.5-0.8

where F(z) = a surface area of gas generant in burning/ an initial surface area of gas generant, and
z = weight of gas generant burned/ initial weight of gas generant.

**10.** The gas generator according to any of the preceding Claims, **characterized in that** the gas generants are formed into a columnar form or tablet form by tableting.

**11.** The gas generator according to any of the preceding Claims, **characterized in that** the gas generants comprise at least a nitrogen-containing organic compound used as a fuel and an inorganic compound used as an oxidizing agent.

**12.** A gas generator comprising two or three or more chambers partitioned by two or three or more partition plates, gas generants filled in at least one of the chambers, and gas flow rate regulating means comprising one or two or more openings formed in each of the partition plates, wherein there are provided two or three or more gas flow rate regulating means located on a pathway through which gas generated from the gas generants is discharged from a combustion chamber to an outside of the gas generator, and a second smallest opening area B of the gas flow rate regulating means is adjusted to be in the range between A and 1.3A, where "A" is the smallest opening area of the gas flow rate regulating means (a total area of the openings forming the gas flow rate regulating means).

**13.** The gas generator according to Claim 12, **characterized in that** the hole of the gas flow rate regulating means having the opening area A or the opening area B communicates between the chamber and an outside of the gas generator.

**14.** The gas generator according to Claim 13, **characterized in that** at least a part of the gas generants comprise a solid gas generant, and **in that** filtering member for collecting solid residuals that remain after the gas generants are burned are provided in the combustion chamber.

**15.** The gas generator according to Claim 14, **characterized in that** the filtering member for collecting the solid residuals is a woven metal sheet, an expanded metal or a punching plate.

**16.** The gas generator according to any of Claims 12 to 15, **characterized in that** any of the gas flow rate regulating means are able to adjust the opening area through use of pressure.

**17.** The gas generator according to Claim 16, **characterized in that** the means for adjusting the opening area through use of pressure are effected by change in breaking pressure of a sealing tape stuck on the gas flow rate regulating means.

**18.** The gas generator according to Claim 16, **characterized in that** the means for adjusting the opening area through use of pressure are effected by combination of the gas flow rate regulating means having different opening areas.

**19.** The gas generator according to any of Claims 12 to 18, **characterized in that** at least a part of the gas generants comprise a solid gas generant, and wherein the solid gas generant is adjusted in form to satisfy the following relations:

When z = 0.4, F(z) = 0.6-0.9 and
When z = 0.6, F(z) = 0.5-0.8

where F(z) = a surface area of gas generant in burning/ an initial surface area of gas generant, and
z = weight of gas generant burned/ initial weight of gas generant.

**20.** The gas generator according to any of Claims 12 to 19, **characterized in that** the gas generants are formed into a columnar form or tablet form by tableting.

**21.** The gas generator according to any of Claims 12 to 20, **characterized in that** the gas generants comprise at least a nitrogen-containing organic compound used as a fuel and an inorganic compound used as an oxidizing agent.

FIG. 1

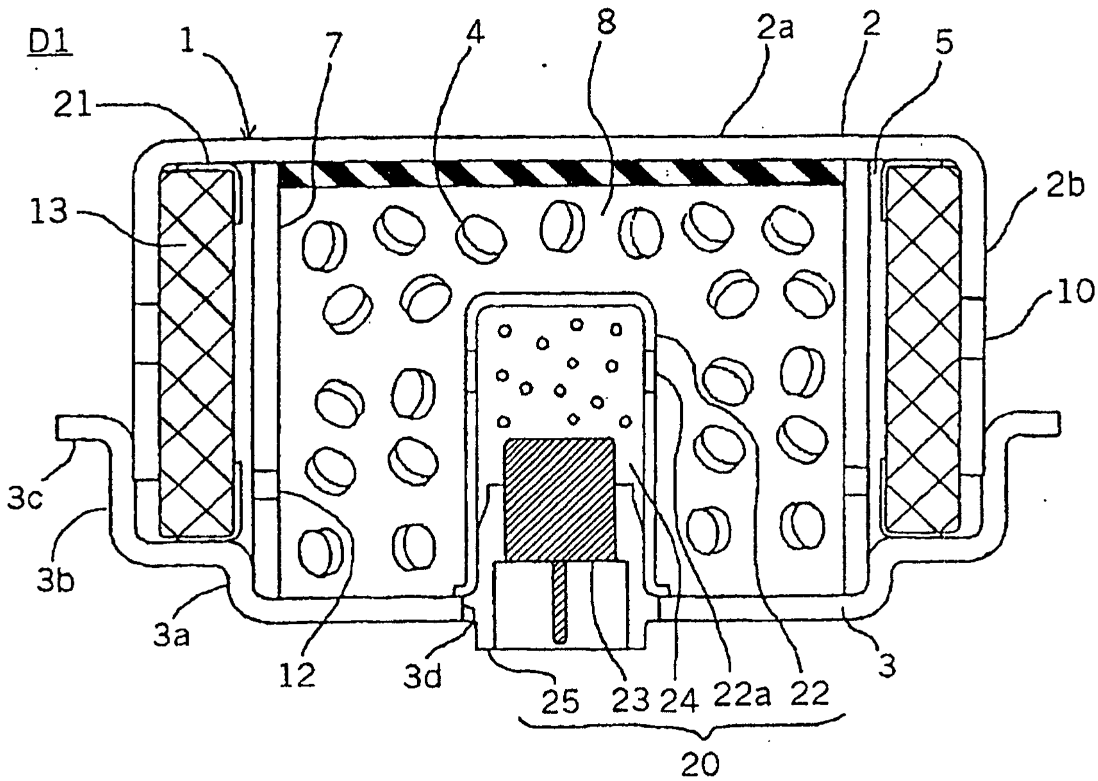

FIG. 2

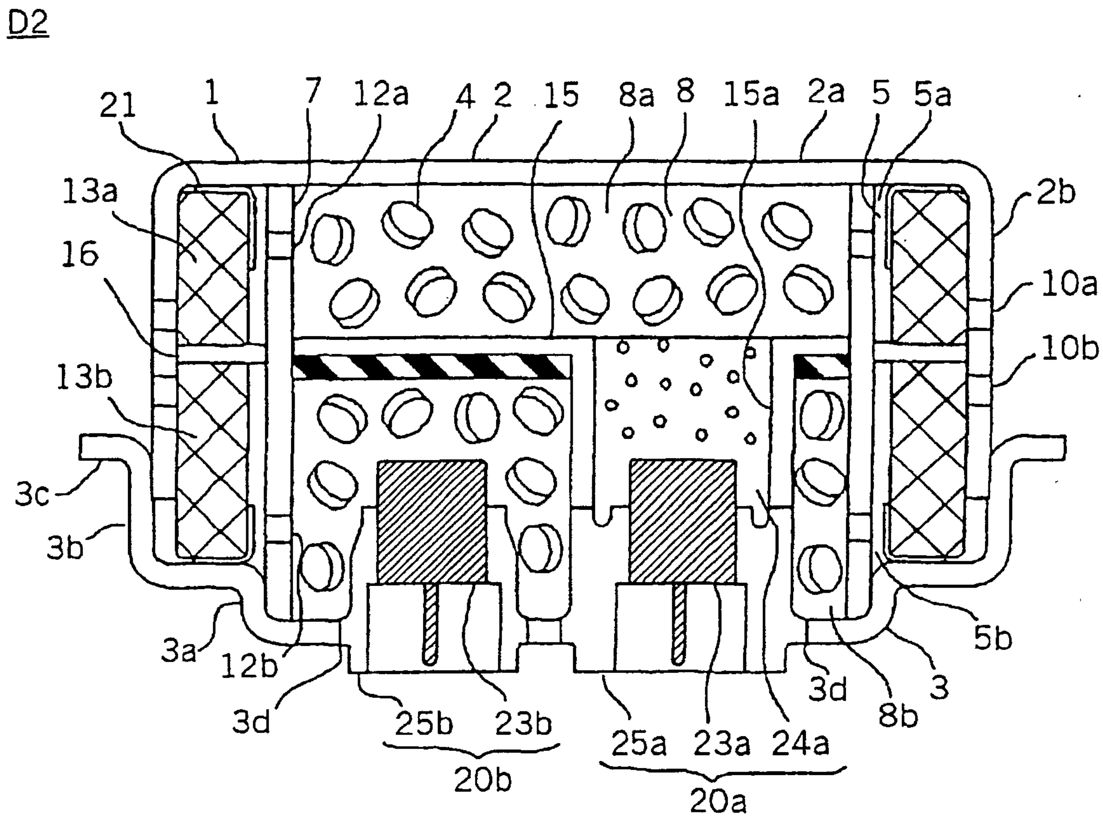
D2
21
1
7
12a
4
2
15
8a
8
15a
2a
5
5a
13a
2b
16
10a
10b
13b
3c
3b
3a
12b
3d
25b
23b
20b
25a
23a
24a
20a
3d
8b
3
5b

FIG. 3

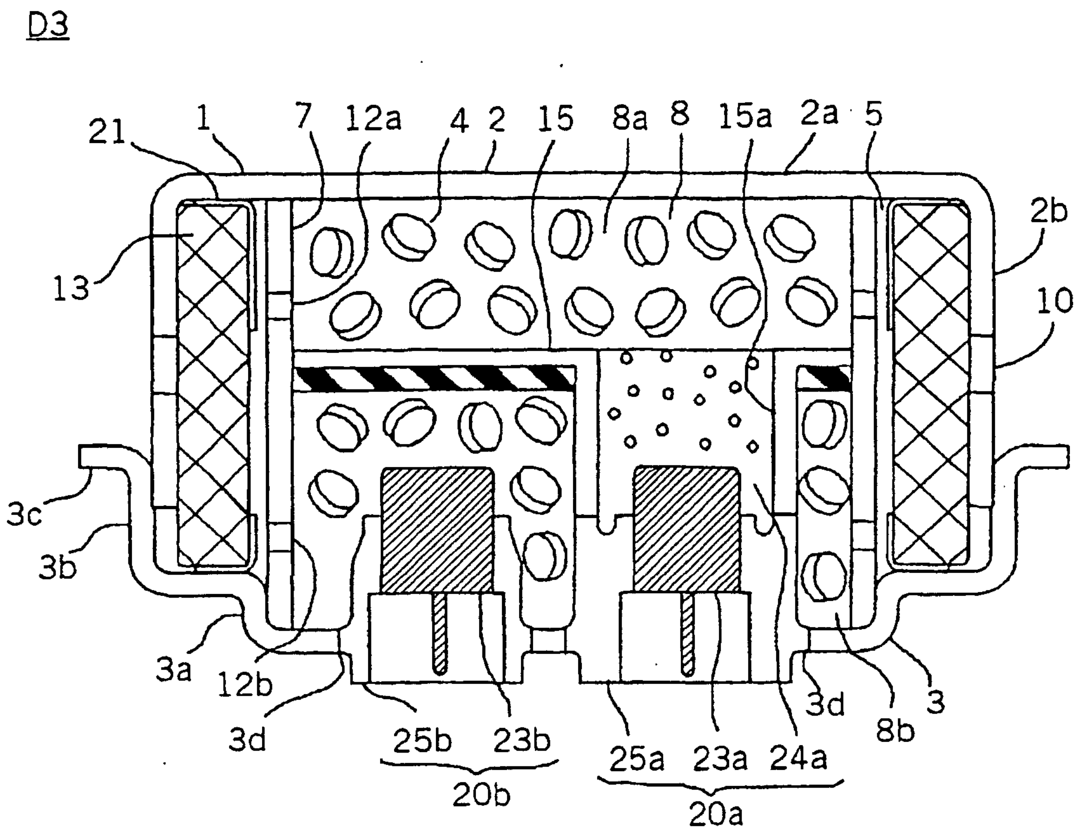
D3
21
1
7
12a
4
2
15
8a
8
15a
2a
5
2b
10
13
3c
3b
3a
12b
3d
25b
23b
20b
25a
23a
24a
20a
3d
8b
3

FIG. 4

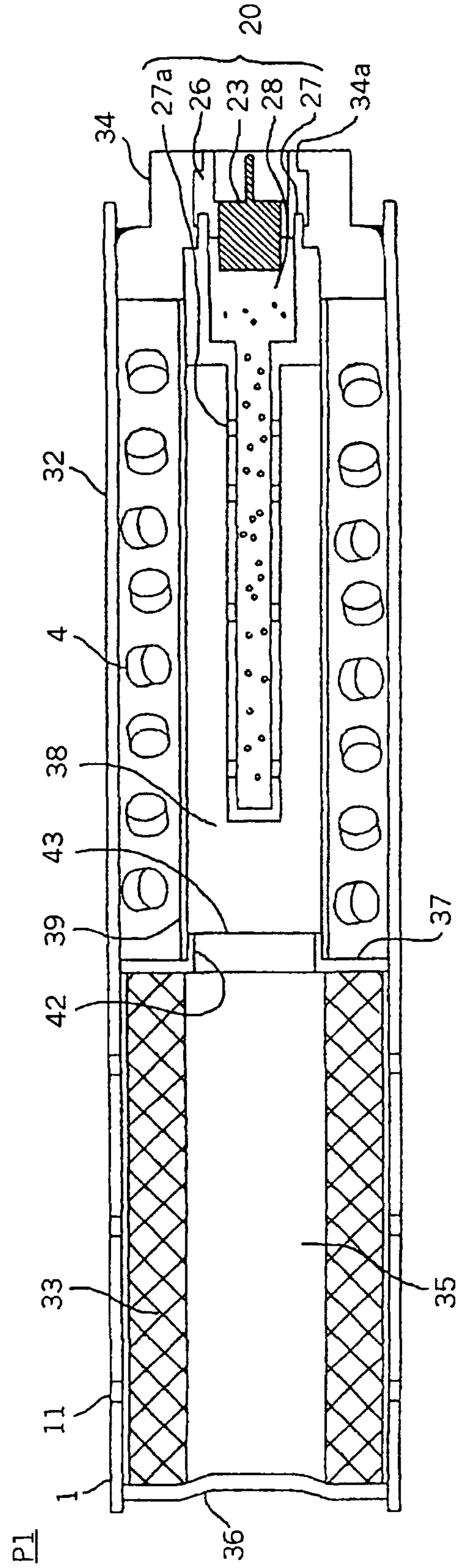

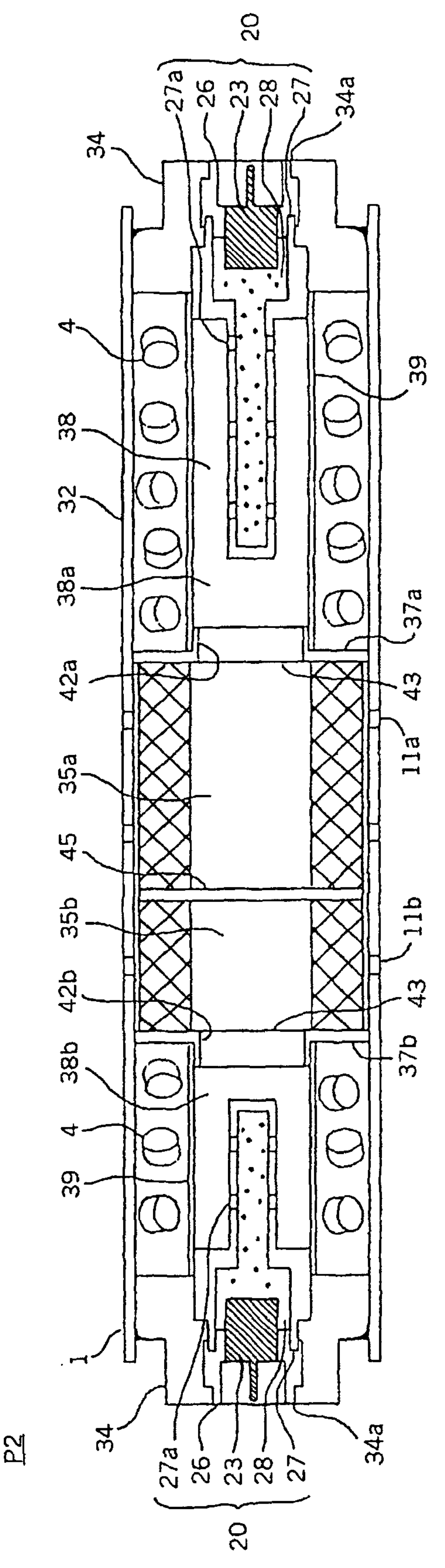
20
27a
26
23
28
27
34a
34
4
38
32
38a
39
37a
42a
43
35a
11a
45
35b
11b
42b
43
38b
37b
4
39
1
34
34a
27a
26
23
28
27
20
P2

FIG. 5

FIG. 6

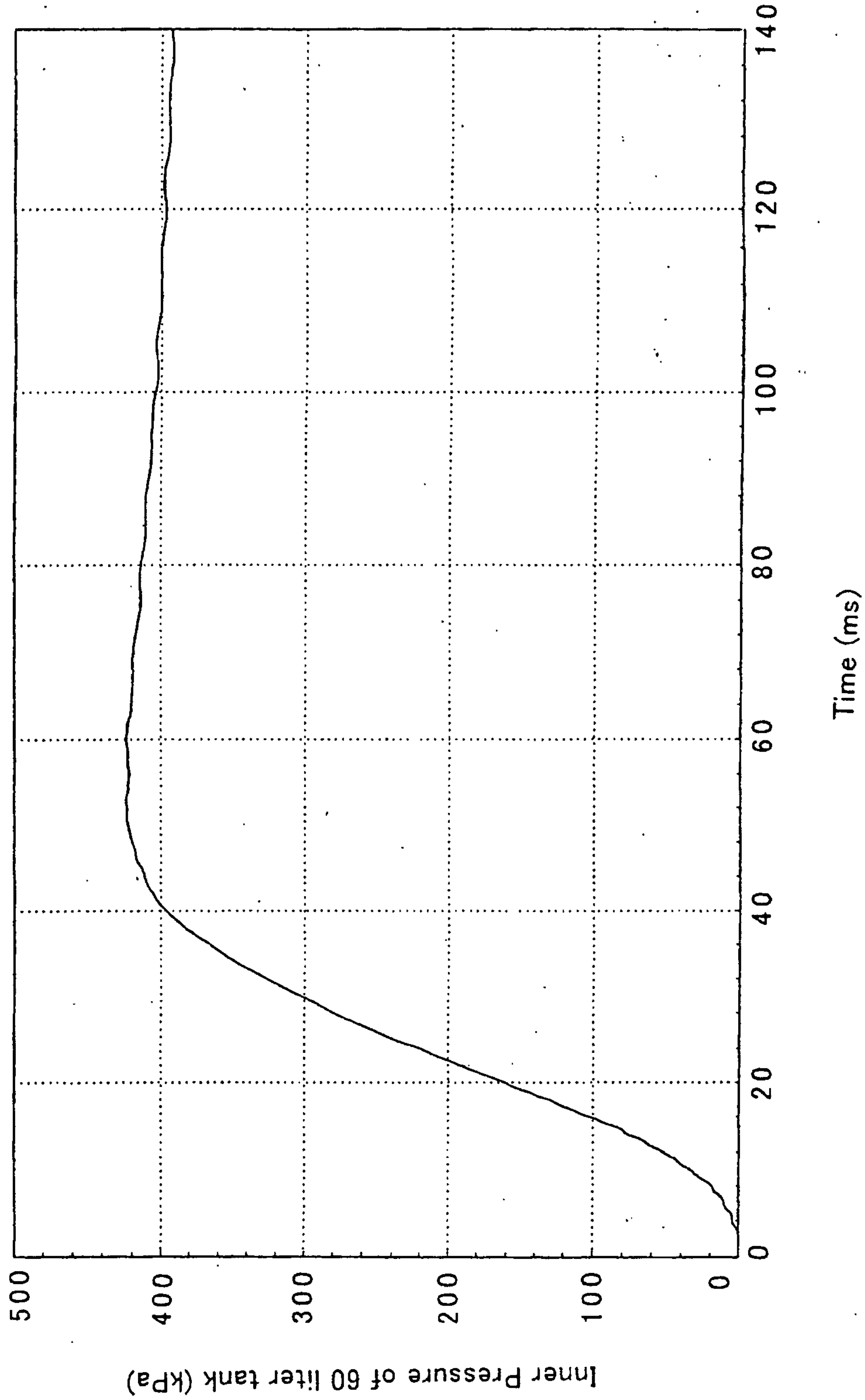
Inner Pressure of 60 liter tank (kPa)
0
100
200
300
400
500
Time (ms)
0
20
40
60
80
100
120
140

FIG. 7

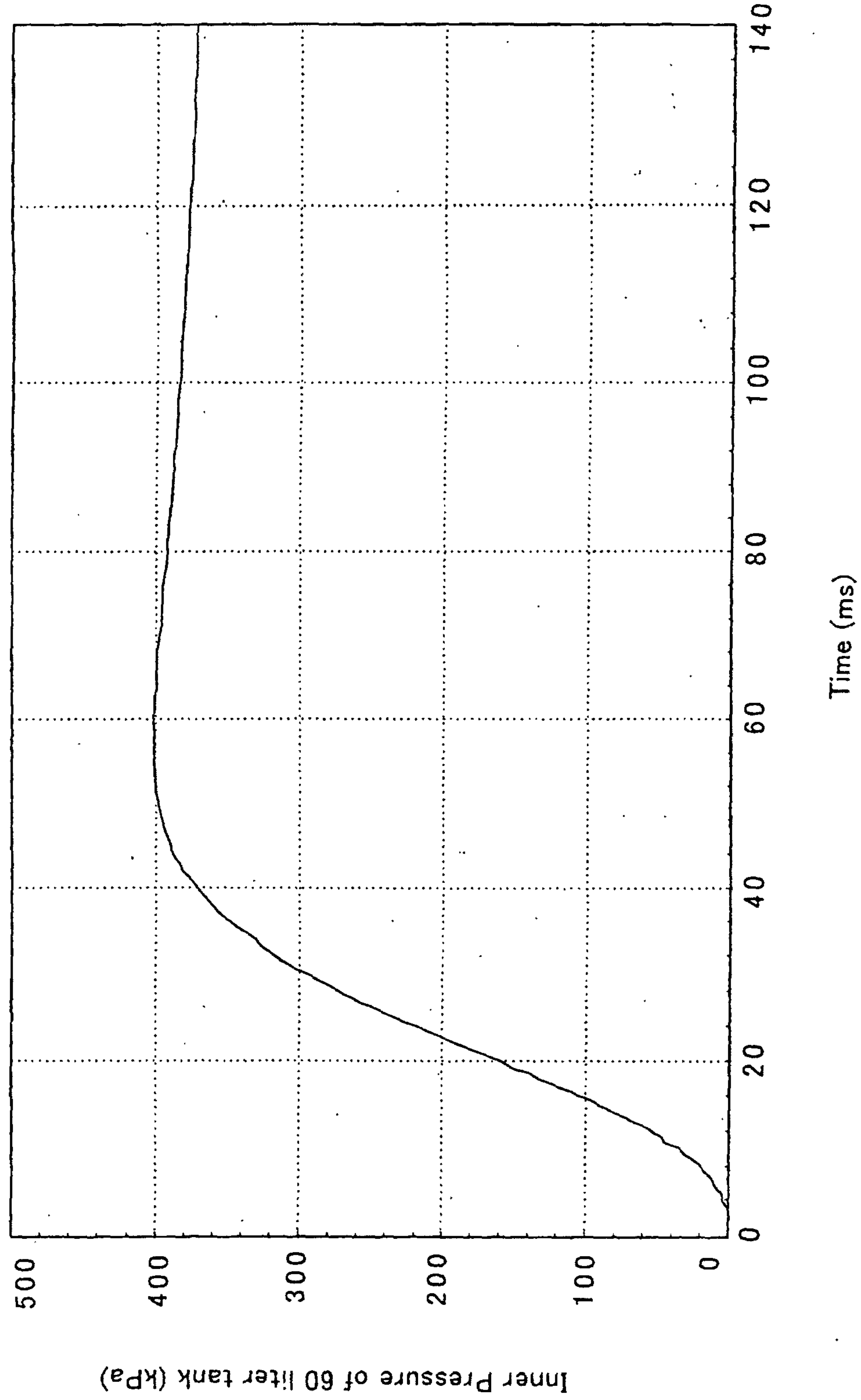
Inner Pressure of 60 liter tank (kPa)
0
100
200
300
400
500
Time (ms)
0
20
40
60
80
100
120
140

FIG. 8

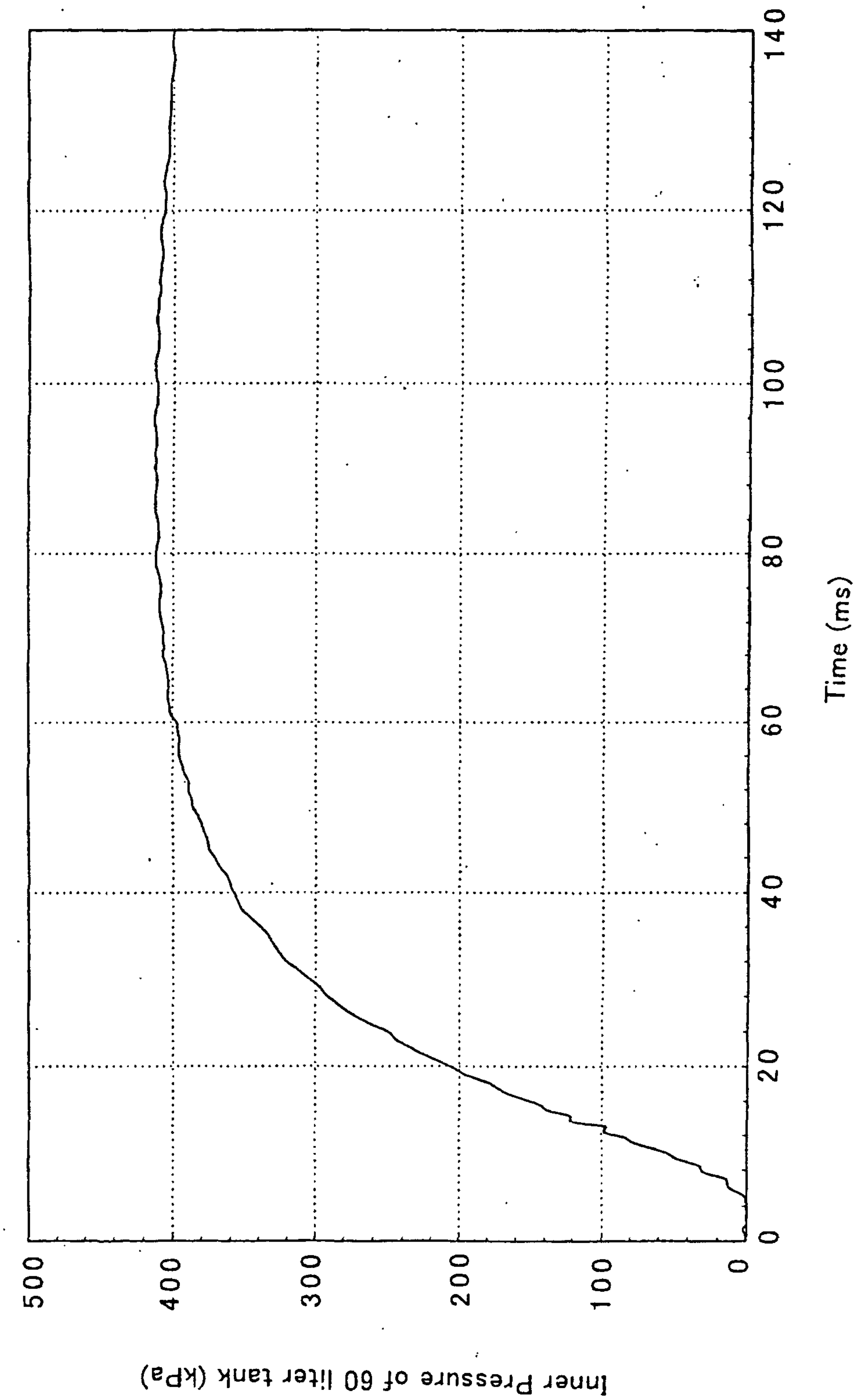
Inner Pressure of 60 liter tank (kPa)
0
100
200
300
400
500
Time (ms)
0
20
40
60
80
100
120
140

FIG. 9

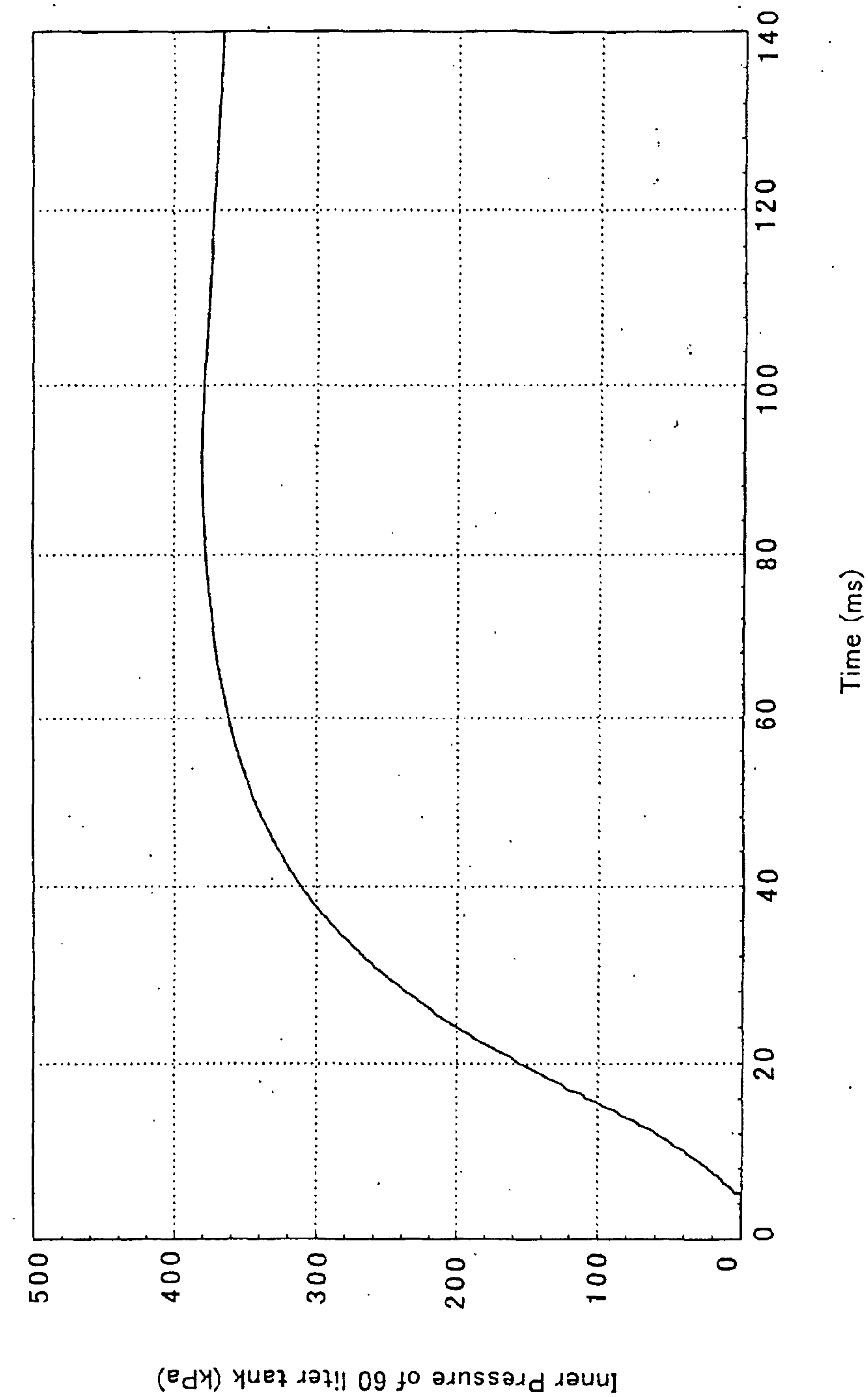
Inner Pressure of 60 liter tank (kPa)
0
100
200
300
400
500
Time (ms)
0
20
40
60
80
100
120
140

FIG. 10

| | S1 | S2 | B/A |
|---|---|---|---|
| Example 1 | 154 | 109 | 1.4 |
| Example 2 | 133 | 109 | 1.2 |
| Comparative Example 1 | 118 | 201 | 1.7 |
| Comparative Example 2 | 154 | 327 | 2.1 |

Where A is an opening area of the smallest gas flaw rate regulating means; and

B is an opening area of the second smallest gas flow rate regulating means

FIG. 11

| | t1(ms) | Pt20 (kPa) | Pt40 (kPa) | Pmax (kPa) | tPmax (ms) |
|---|---|---|---|---|---|
| Example 1 | 4.8 | 160.7 | 396.1 | 424.3 | 53.4 |
| Example 2 | 4.8 | 159.1 | 371.2 | 401.6 | 56.2 |
| Comparative Example 1 | 5.6 | 206.7 | 357.8 | 412.0 | 79.4 |
| Comparative Example 2 | 5.3 | 155.8 | 310.9 | 380.1 | 87.6 |

Where t1 is the time required for an inner pressure of the 60 liter tank to start rising after ignition of the gas generator;

Pt20 is an inner pressure after 20ms passed from the ignition of the gas generator;

Pt40 is an inner pressure after 40ms passed from the ignition of the gas generator;

Pmax is a maximum pressure; and

tPmax is the time required for the inner pressure of the tank to reach the maximum pressure (Pmax) after the ignition of the gas generator.

## INTERNATIONAL SEARCH REPORT

International application No.
PCT/JP02/03572

A. CLASSIFICATION OF SUBJECT MATTER
Int.Cl$^7$ B60R21/26

According to International Patent Classification (IPC) or to both national classification and IPC

B. FIELDS SEARCHED

Minimum documentation searched (classification system followed by classification symbols)
Int.Cl$^7$ B60R21/16-21/32

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 96/10494 A1 (Sensor Technology Co., Ltd. et al.), 11 April, 1996 (11.04.96), & EP 783997 A & JP 2862023 B | 1-21 |
| A | JP 11-263185 A (Takata Corp.), 28 September, 1999 (28.09.99), & EP 943502 A | 1-21 |
| A | JP 10-315898 A (Nippon Kayaku Co., Ltd. et al.), 02 December, 1998 (02.12.98), (Family: none) | 1-21 |
| A | JP 9-95202 A (Nippon Kayaku Co., Ltd. et al.), 08 April, 1997 (08.04.97), (Family: none) | 1-21 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>28 May, 2002 (28.05.02) | Date of mailing of the international search report<br>11 June, 2002 (11.06.02) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

| International application No. |
|---|
| PCT/JP02/03572 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-2194 A (Nippon Kayaku Co., Ltd. et al.), 07 January, 1997 (07.01.97), (Family: none) | 1-21 |
| A | JP 49-44434 A (Nissan Motor Co., Ltd.), 26 April, 1974 (26.04.74), (Family: none) | 1-21 |

Form PCT/ISA/210 (continuation of second sheet) (July 1998)